# EUROPÄISCHE PATENTANMELDUNG

(11) **EP 4 847 361 A1**
(43) Veröffentlichungstag der Anmeldung: **02.12.2026**
(21) Anmeldenummer: 26181047.7
(22) Anmeldetag: 26.05.2026
(51) Int. Cl.: B62K 25/02, B62J 11/00, B62K 27/12, B62H 1/02, B62J 7/00, B62K 27/00

(54) **UNIVERSALSTECKACHSE FÜR FAHRRÄDER UND ELEKTROFAHRRÄDER**

(30) Priorität: 26.05.2025 DE 202025102904 U
(71) Anmelder: Eagleview Group GmbH, 7205 Zizers (CH)
(72) Erfinder: Ullrich, Daniel, 7205 Zizers (CH)
(74) Vertreter: Rentsch Partner AG

(57) **Zusammenfassung**

Universalsteckachse 1 zur Befestigung eines Rades an einem Rahmen eines Fahrrads oder Elektrofahrrads mit einem länglichen Achskörper 10 mit einer ersten 10.1 und einer zweiten Seite 10.2, wobei an den Seiten 10.1, 10.2 Befestigungsmittel 100, 101 zur Befestigung der Universalsteckachse 1 an einem Rahmen ausgebildet sind, wobei an mindestens einer Seite 10.1 des Achskörpers 10 ein Kupplungsadapter 102 zur Aufnahme eines Kupplungselements 11 angeordnet oder ausgebildet ist.

## Beschreibung

### GEBIET DER OFFENBARUNG

Die vorliegende Offenbarung betrifft eine Universalsteckachse zur Befestigung eines Rades an einem Rahmen eines Fahrrads oder Elektrofahrrads. Die Universalsteckachse dient als Universalfixpunkt am Fahrrad oder Elektrofahrrads für diverses am Markt erhältliches Zubehör.

### HINTERGRUND DER OFFENBARUNG

US2003062705A1 veröffentlicht 2003 im Namen von ALBERTA LTD. Betrifft eine Fahrradanhängerkupplung zum Sichern eines Anhängers an einem Fahrrad, wobei der Anhänger eine Deichsel aufweist und das Fahrrad ein Hinterrad mit einer Achse mit einer Rotationsachse und einen Rahmen aufweist.

US2024083540A1 veröffentlicht 2024 im Namen von Chiu Chih-Wen betrifft eine Fahrradzubehör-Befestigungsstruktur, um ein Fahrradzubehör an einem Fahrrad zu befestigen. In der Fahrradzubehör-Befestigungsstruktur sind am Fahrrad ausgebildete Vertiefungsnuten und an einem Montageteil angeordnete Stabilisierungsblöcke miteinander zusammengefügt, so dass das Montageteil stabil auf dem Fahrrad sitzt und sich nicht leicht lockert, und ein Fahrradzubehör auf dem Montageteil montiert werden kann.

### ZUSAMMENFASSUNG DER OFFENBARUNG

Aus dem Stand der Technik sind bereits Universalsteckachsen bekannt, die mit Befestigungsmitteln zur Befestigung der Universalsteckachse an einem Rahmen ausgebildet sind. Manche Steckachsen weisen zudem ein Gewindestift für die Montage von Anhängerkupplungen oder Gepäckträgern etc. auf.

Nachteilig bei den bekannten Universalsteckachsen ist unter anderem, dass der Anwender sich von vornherein entscheiden muss, welches Zubehör am Fahrrad oder Elektrofahrrad montiert werden soll. Bei bekannten Achsen ist zudem nur die Montage eines Zubehörs möglich, entweder Anhängerkupplung, Gepäckträger oder Ständern.

Die vorliegende Offenbarung adressiert zumindest einen der vorgenannten Nachteile, um eine Universalsteckachse zu schaffen, welche als Fixpunkt für sämtliches Zubehör wie Gepäckträger, Anhänger und Ständer ausgebildet ist. Die vorliegende Offenbarung soll es dem Anwender ermöglichen, die Universalsteckachse immer an sein Fahrrad anpassen zu können, ohne eine weiterer Universalsteckachsen montieren und mithin erwerben zu müssen.

Ein Aspekt der vorliegenden Offenbarung betrifft eine Universalsteckachse zur Befestigung eines Rades an einem Rahmen eines Fahrrads oder Elektrofahrrads. Eine Universalsteckachse bezeichnet ein stabförmiges Verbindungselement, das dazu dient, ein Laufrad drehbar und lösbar in den Rahmen eines Zweirads zu fixieren, wobei sie für verschiedene Rahmentypen oder Anbauteile anpassbar ist. Ein Rahmen stellt die tragende Struktur des Fahrrads oder Elektrofahrrads dar, welches die einzelnen Komponenten wie Gabel, Hinterbau und Laufräder strukturell miteinander verbindet. Die Universalsteckachse weist einen länglichen Achskörper auf, welcher sich entlang einer Längsachse erstreckt und eine erste Seite sowie eine gegenüberliegende zweite Seite definiert. Dieser längliche Achskörper dient als tragendes Hauptelement zur Übertragung von Kräften zwischen dem Rad und dem Rahmen. An der ersten Seite und der zweiten Seite des Achskörpers sind Befestigungsmittel ausgebildet. Diese Befestigungsmittel ermöglichen eine sichere und stabile Fixierung der Universalsteckachse am Rahmen des Fahrrads oder Elektrofahrrads, indem sie eine kraft- oder formschlüssige Verbindung mit den entsprechenden Aufnahmen des Rahmens herstellen. An mindestens einer Seite des Achskörpers ist ein Kupplungsadapter angeordnet oder ausgebildet. Dieser Kupplungsadapter ist dafür eingerichtet, ein Kupplungselement aufzunehmen, wodurch eine mechanische Schnittstelle geschaffen wird, über die externe Komponenten, wie beispielsweise ein Anhänger, an die Universalsteckachse und somit an das Fahrrad gekoppelt werden können.

In bevorzugten Ausführungsformen weist der Kupplungsadapter in seinem Querschnitt eine Kupplungskontur mit zumindest einer Ausprägung und/oder zumindest einer Ausnehmung in radialer Richtung auf, um den Kupplungsadapter verdrehsicher aufzunehmen. Unter einem Kupplungsadapter kann ein Bauteil verstanden werden, das dazu dient, eine mechanische Verbindung zwischen der Universalsteckachse und einem externen Element herzustellen. Unter einer Kupplungskontur kann eine geometrische Formgebung verstanden werden, die für einen formschlüssigen Eingriff ausgebildet ist. Unter einer Ausprägung kann eine lokale Materialerhebung verstanden werden und unter einer Ausnehmung kann entsprechend eine lokale Materialvertiefung verstanden werden. Die radiale Richtung ist senkrecht zur Längsachse des Achskörpers. Ein Vorteil dieser Anordnung liegt darin, dass durch die radiale Ausrichtung der Ausprägung oder Ausnehmung ein formschlüssiger Eingriff ermöglicht wird, welcher Drehmomente zuverlässig überträgt. Dies bewirkt eine verdrehsichere Aufnahme des Kupplungselements, wodurch unerwünschte Rotationsbewegungen blockiert werden und die mechanische Belastbarkeit der Verbindung gesteigert wird.

In manchen Ausführungsformen ist der Kupplungsadapter rotationssymmetrisch bezüglich einer Rotation um eine Längsachse des Achskörpers. Unter rotationssymmetrisch kann eine Eigenschaft verstanden werden, bei der ein Körper durch Drehung um einen bestimmten Winkel um eine Symmetrieachse (hier die Längsachse) auf sich selbst abgebildet wird. Ein Vorteil dieser Anordnung liegt in der Vereinfachung der Montage, da das Kupplungselement in verschiedenen Winkelpositionen aufgesetzt werden kann und so eine Montage unabhängig von der Winkelposition der Universalsteckachse erreicht wird

Bevorzugt weist der rotationssymmetrische Kupplungsadapter zwei oder mehr Ausprägungen auf. Entsprechend sind die Ausprägungen in einem Winkel von 180°, 120°, 90°, 72°, 60°, 51.4°, 45°, 40°, 36°, 32.7°, 30°, 27.7°, 25.7°, 24°, 22.5°, 21.2°, 20°, 18.9°, 18°, 17.1°, 16.4° (22 Ausprägungen) etc. bezogen auf die Querschnittebene des Kupplungsadapters zueinander ausgerichtet.

Gute Ergebnisse können erzielt werden, wenn der Kupplungsadapter in seinem Querschnitt sternförmig oder mehrkantig ausgebildet ist. Vorzugsweise sind mindestens zwei der durch die Stern- oder Mehrkantform des Kupplungsadapters gebildeten Ausprägungen und/oder Ausnehmungen in einem Winkel von ±22,5° und/oder ±45° bezogen auf die Querschnittebene des Kupplungsadapters zueinander ausgerichtet. Unter sternförmig kann eine Geometrie verstanden werden, die mehrere radial nach aussen weisende Zacken aufweist. Unter mehrkantig kann eine Geometrie verstanden werden, die durch mehrere ebene Flächen begrenzt ist, die in Kanten aufeinandertreffen. Unter einer Querschnittebene kann eine Ebene verstanden werden, die senkrecht zur Längsachse des Kupplungsadapters verläuft. Ein Vorteil dieser Anordnung liegt darin, dass die sternförmige oder mehrkantige Ausbildung des Querschnitts eine Verteilung der wirkenden Kräfte auf mehrere Kontaktflächen bewirkt. Dies reduziert lokale Spannungsspitzen und erhöht die übertragbare Torsionskraft. Ein weiterer Vorteil dieser Anordnung, insbesondere der Ausrichtung der Ausprägungen oder Ausnehmungen in einem Winkel von ±22,5° und/oder ±45° bezogen auf die Querschnittebene, besteht darin, dass eine feinstufige und präzise Winkeleinstellung des Kupplungselements ermöglicht wird. Dies erleichtert die Ausrichtung und Anpassung an unterschiedliche Anschlusskomponenten.

In manchen Ausführungsformen umfasst die Universalsteckachse ein Kupplungselement für ein Anbauteil, wobei das Kupplungselement mindestens eine mit dem Querschnitt des Kupplungsadapters entsprechend korrespondierend ausgebildete, insbesondere sternförmige oder mehrkantige, Aufnahme zur form- und/oder kraftschlüssigen Aufnahme des Kupplungsadapters umfasst. Ein Kupplungselement kann verstanden werden als ein Bauteil zur mechanischen Ankopplung einer externen Komponente. Ein Anbauteil kann verstanden werden als eine an der Universalsteckachse zu befestigende Vorrichtung, wie beispielsweise ein Fahrradanhänger oder ein Ständer. Eine sternförmige oder mehrkantige Aufnahme kann verstanden werden als eine Aussparung mit einer profilierten Innenkontur, die mehrere Ecken oder Zacken aufweist. Ein Vorteil dieser Anordnung liegt darin, dass durch die korrespondierende sternförmige oder mehrkantige Ausgestaltung der Aufnahme eine formschlüssige Verbindung erzielt wird, die eine besonders zuverlässige und spielfreie Drehmomentübertragung ermöglicht. Gegebenenfalls kann vorgesehen sein, dass der Kupplungsadapter und die Aufnahme des Kupplungselements ausgebildet sind, die Aufnahmeposition des Kupplungselements an dem Kupplungsadapter um einen Winkel von ±22,5° und/oder ±45° verstellen zu können. Eine Aufnahmeposition kann verstanden werden als die relative Drehwinkellage des Kupplungselements in Bezug auf den Kupplungsadapter. Ein Vorteil dieser Anordnung ist, dass eine flexible Ausrichtung des Kupplungselements ermöglicht wird, wodurch das Kupplungselement bzw. das Anbauteil optimal ausgerichtet werden können.

Eine gute Stabilität ist möglich, wenn das Kupplungselement aus einem Profilkörper gebildet ist, an dem zusätzlich zur Aufnahme optional mindestens eine Verbindungsaufnahme ausgebildet oder aufgenommen ist. Es ist jedoch ebenso denkbar, dass das Kupplungselement bzw. der Ständer direkt auf den Kupplungsadapter aufgesteckt wird, ohne dass eine zusätzliche Abstützung oder Verbindungsaufnahme erforderlich ist. Ein Profilkörper kann verstanden werden als ein Bauteil mit einer definierten, tragfähigen Querschnittsform. Eine Verbindungsaufnahme kann verstanden werden als eine Öffnung, Bohrung oder Aussparung zur Befestigung eines weiteren Elements.

Bevorzugt ist die mindestens eine Verbindungsaufnahme an einem von der Aufnahme weggerichteten Profilteil des Profilkörpers angeordnet ist. Ein Vorteil dieser Anordnung ist, dass durch den räumlichen Abstand zwischen der Aufnahme und der Verbindungsaufnahme diese separat zugänglich macht, sodass die separate Montage erleichtert wird.

Gegebenenfalls kann der Profilkörper plattenförmig ausgebildet sein. Alternativ, oder zusätzlich kann der Profilkörper insbesondere L-förmig ausgebildet sein. Ein Vorteil dieser Anordnung ist, dass eine plattenförmige Ausgestaltung eine hohe Festigkeit bei gleichzeitig sehr geringem Eigengewicht bietet. Ein weiterer Vorteil dieser Anordnung, insbesondere bei der L-förmigen Ausgestaltung, liegt darin, dass sich der Profilkörper optimal an die Konturen eines Fahrradrahmens anschmiegen kann, was eine besonders platzsparende und optisch unauffällige Integration ermöglicht.

Es kann vorgesehen sein, dass an der ersten Seite der Universalsteckachse eine Schraube, eine Mutter und/oder einen Schnellspanner lösbar mit dem Achskörper verbunden ist, um Zubehör oder ein Kupplungselement in Längsrichtung an den Achskörper zu fixieren. Ein Schnellspanner kann verstanden werden als eine Vorrichtung, die ein werkzeugloses und schnelles Festklemmen oder Lösen von Bauteilen mittels eines Hebels ermöglicht. Ein Vorteil dieser Anordnung liegt darin, dass durch die lösbare Verbindung der Schraube, der Mutter und/oder des Schnellspanners an der ersten Seite des Achskörpers eine einfache Montage und Demontage des Zubehörs oder des Kupplungselements ermöglicht wird. Eine De- und Montage der Achse selbst mit dem Schnellspanner ist in der Regeln nicht vorgesehen, dies erlaubt die Achse montiert zu lassen, während Zubehör montiert oder demontiert wird.

Für eine einfache und modulare Handhabung kann der Schnellspanner eine Lagerschraube und einen Spannhebel umfassen. Die Lagerschraube umfasst einem Kopf und einem in Längsrichtung dem Kopf gegenüberliegenden Gewindeabschnitt, der in eine endseitige Öffnung des Achskörpers eingeschraubt ist. Ein Vorteil dieser Anordnung liegt darin, dass durch das Einschrauben des Gewindeabschnitts der Lagerschraube direkt in die endseitige Öffnung des Achskörpers eine hochfeste, koaxiale Verbindung geschaffen wird, welche Zugkräfte in Längsrichtung unmittelbar und ohne Umlenkung auf den Achskörper überträgt. Gute Ergebnisse können erzielt werden, wenn der Spannhebel ein länglicher Exzenterspannhebel mit einer gabelförmigen Aufnahme zur Aufnahme des Kopfes der Lagerschraube ist. Der Exzenterspannhebel ist um eine durch den Kopf der Lagerschraube verlaufende Schwenkachse schwenkbar gelagert und weist einen relativ zur Schwenkachse exzentrische ausgeformten Anschlag auf. Beim Verschwenken des Exzenterspannhebels aus einer geöffneten Stellung in eine geschlossene Stellung wird eine axiale Zugspannung auf den Achskörper bewirkt. Ein Exzenterspannhebel kann als ein Hebel verstanden werden, der über eine unrunde, exzentrische Kontur verfügt, um durch eine Drehbewegung eine lineare Spannkraft zu erzeugen. Eine gabelförmige Aufnahme kann als eine zweigeteilte, u-förmige Struktur verstanden werden, die ein anderes Bauteil zweiseitig umgreift und lagert. Ein Vorteil dieser Anordnung besteht darin, dass die gabelförmige Aufnahme den Kopf der Lagerschraube symmetrisch umschliesst, wodurch die beim Spannen auftretenden Kräfte gleichmässig auf beide Seiten des Kopfes verteilt werden und ein Verkanten oder Biegen der Lagerschraube zuverlässig ausgeschlossen wird. Ein Vorteil dieser Anordnung ist, dass durch den relativ zur Schwenkachse exzentrischen Anschlag beim Verschwenken des Exzenterspannhebels von der geöffneten in die geschlossene Stellung eine kontinuierlich ansteigende, mechanisch übersetzte axiale Zugkraft erzeugt wird, die den Achskörper spielfrei und hochfest verspannt, was die Steifigkeit des Gesamtsystems signifikant erhöht. Insbesondere kann das Kopplungselement in Längsrichtung zwischen dem Kupplungsadapter und dem Exzenterhebel angeordnet sein, sodass das Kopplungselement in der geschlossenen Stellung des Exzenterhebels geklemmt bzw. angepresst wird.

In einer weiteren vorteilhaften Ausgestaltung ist der Exzenterspannhebel temporär an der Lagerschraube ansetzbar und somit abnehmbar ausgeführt. Die axiale Klemmkraft kann dabei ausschliesslich über den integrierten Spannradius des Exzenterhebels beim Umlegen erzeugt werden. Zur Erhöhung der Sicherheit kann eine Querbohrung in der gabelförmigen Aufnahme für ein mechanisches Sicherungselements, wie eines Sicherungssplints, vorgesehen sein. Der Schraubenkopf kann beispielsweise ein Mitnahmeprofil aufweisen, vorzugsweise weist der Exzenterspannhebel ein korrespondierendes Schlüsselprofil auf, um in einem abgenommenen Zustand die Lagerschraube anziehen oder lösen zu können. Als Mitnehmer bzw. Schlüsselprofil können beispielsweise Torx oder Inbus verwendet werden.

In einigen Ausführungsformen ist der Achskörper einstückig mit dem Kupplungsadapter ausgebildet ist. Eine einstückige Ausbildung kann verstanden werden als eine Ausführung aus einem einzigen, durchgehenden Materialstück ohne Trennfugen. Beispielsweise kann der Achskörper einstückig und vollständig aus einem Vollmaterial, wie Aluminium oder Edelstahl, gefräst werden. Ein Vorteil dieser Anordnung liegt darin, dass durch die einstückige Ausbildung des Achskörpers mit dem Kupplungsadapter eine besonders hohe mechanische Stabilität und Belastbarkeit erreicht wird, da keine Fügestellen vorhanden sind, die unter mechanischer Last versagen könnten.

In einigen anderen Ausführungsformen ist der Achskörper mit einem separaten, den Kupplungsadapter aufweisenden, Endstück verbunden ist. Ein Endstück kann verstanden werden als ein Bauteil, welches an einem axialen Ende des Achskörpers angeordnet und mit diesem fest oder lösbar verbindbar ist. Ein separates Bauteil kann verstanden werden als ein eigenständiges, unabhängig hergestelltes Element, das erst in einem Montageschritt mit einem anderen Bauteil zusammengefügt wird. Ein Vorteil dieser Anordnung besteht darin, dass durch die Verwendung eines separaten Endstücks, welches den Kupplungsadapter aufweist, eine hohe Flexibilität und Modularität erreicht wird. Dies ermöglicht es, den Achskörper mit unterschiedlichen Endstücken zu kombinieren, um die Universalsteckachse an verschiedene Kupplungssysteme anzupassen, ohne den gesamten Achskörper modifizieren zu müssen. Diese Anordnung erlaubt eine gezielte Materialauswahl für das Endstück und den Achskörper, wodurch das Gesamtgewicht optimiert und die Herstellungskosten gesenkt werden können. Das offenbarte Endstück, den offenbarungsgemässen Kupplungsadapter aufweisend, ist prinzipiell unabhängig von der offenbarten Universalsteckachse und kann auch mit anderen Stackachsen kombiniert werden. Dies stellt ein separates erfinderisches Konzept dar und kann in einer oder mehreren Teilanmeldungen weiterverfolgt werden.

Die Universalsteckachse kann für Zuglasten von bis zu 100 kg bei einer Ausführung aus Edelstahl oder bis zu 60 kg bei einer Ausführung aus Aluminium ausgelegt sein. Zudem kann der Kupplungsadapter als Distanzstück ausgebildet sein, um eine anzubringende Kupplungselement axial vom Fahrradrahmen zu beabstanden und so Rahmenkollisionen zu vermeiden.

Gemäss einer weiteren Variante weist der Kupplungsadapter eine asymmetrische oder unregelmässige Konturierung auf.

In manchen Varianten kann im Kupplungsadapter koaxial ein Innen- und/oder Aussengewinde, vorzugsweise ein, ein M6-, M8-, M10- oder M12-Gewinde, integriert sein, welches zur parallelen oder alternativen Aufnahme von Standard-Anhängerkupplungen oder Gepäckträgern ausgelegt ist.

Hinsichtlich des Kupplungselements kann dieses in einer Ausführungsform eine kreisförmige Aufnahmeöffnung, beispielsweise eine 12-mm-Bohrung, zur direkten, formschlussfreien und reibschlüssigen Montage an einer Seite des Achskörpers, insbesondere auf einem Aussengewinde des Kupplungsadapters.

Des Weiteren können der Ständer und das Kupplungselement einstückig oder fest verbunden ausgebildet sein.

Ein weiterer Aspekt der vorliegenden Offenbarung betrifft ein Universalsteckachssystem mit einer Universalsteckachse und einem Fahrradständer. An dem Fahrradständer ist eine Ständeraufnahme ausgebildet, die funktionell und strukturell mit einem Kupplungsadapter korrespondiert. Der Kupplungsadapter dient als Koppelstelle an der Universalsteckachse. Durch das Zusammenwirken der Ständeraufnahme mit dem Kupplungsadapter kann der Fahrradständer verdrehsicher an der Universalsteckachse befestigt werden.

Ein weiterer Aspekt der vorliegenden Offenbarung betrifft ein Universalsteckachssystem mit einer Universalsteckachse und einem Gepäckträger. An dem Gepäckträger ist eine mit dem Kupplungsadapter entsprechend korrespondierende Gepäckträgeraufnahme ausgebildet, um den Gepäckträger an der Universalsteckachse zu befestigen. Der Kupplungsadapter bildet ein mechanisches Verbindungselement, das an der Universalsteckachse angeordnet ist, um eine definierte Schnittstelle bereitzustellen. Am Gepäckträger ist eine Gepäckträgeraufnahme ausgebildet, die als komplementäre Haltestruktur ausgeführt ist. Diese Gepäckträgeraufnahme korrespondiert in ihrer geometrischen Gestaltung im Wesentlichen mit dem Kupplungsadapter. Durch das form- oder kraftschlüssige Zusammenwirken der Gepäckträgeraufnahme und des Kupplungsadapters wird der Gepäckträger stabil an der Universalsteckachse fixiert, wodurch eine zuverlässige und belastbare Verbindung zwischen dem Gepäckträger und der Achse hergestellt wird.

Ein weiterer Aspekt der vorliegenden Offenbarung betrifft ein Universalsteckachssystem mit einer Universalsteckachse und einem Anhänger, an dem eine mit dem Kupplungsadapter entsprechend korrespondierende Anhängeraufnahme ausgebildet ist, um den Anhänger an der Universalsteckachse zu befestigen. Die Anhängeraufnahme ist als eine mechanische Schnittstelle definiert, die geometrisch und funktionell so gestaltet ist, dass sie mit dem Kupplungsadapter der Universalsteckachse zusammenwirkt. Die Anhängeraufnahme korrespondiert mit dem Kupplungsadapter, um eine sichere Verbindung herzustellen. Durch das Ineinandergreifen der Anhängeraufnahme und des Kupplungsadapters wird der Anhänger stabil an der Universalsteckachse befestigt, wodurch eine zuverlässige Kraft- und Momentübertragung zwischen dem ziehenden Fahrzeug und dem Anhänger gewährleistet ist.

### KURZBESCHREIBUNG DER ZEICHNUNGEN

Anhand der in den nachfolgenden Figuren gezeigten Ausführungsbeispiele und der dazugehörigen Beschreibung werden Aspekte der Offenbarung näher erläutert. Es zeigen:
- Fig. 1: eine erste Variante einer offenbarungsgemässen Universalsteckachse in einer vorteilhaften Ausführungsform in perspektivischer Ansicht;
- Fig. 2: die erste Variante von Fig. 1 im Querschnitt;
- Fig. 3: eine zweite Variante einer offenbarungsgemässen Universalsteckachse in einer explodierten und teilweise geschnittenen Ansicht;
- Fig. 4: die zweite Variante von Fig. 3 mit einem abgenommenem Exzenterspannhebel;
- Fig. 5: eine dritte Variante der offenbarungsgemässe Universalsteckachse mit einem Fahrradständer in einer perspektivischen Ansicht;
- Fig. 6: a) die erste Variante einer offenbarungsgemässen Universalsteckachse in einer in perspektivischer Ansicht;
b) eine vierte Variante einer offenbarungsgemässen Universalsteckachse in einer in perspektivischer Ansicht; und
c) die zweite bzw. dritte Variante einer offenbarungsgemässen Universalsteckachse in einer in perspektivischer Ansicht.

### BESCHREIBUNG DER AUSFÜHRUNGEN

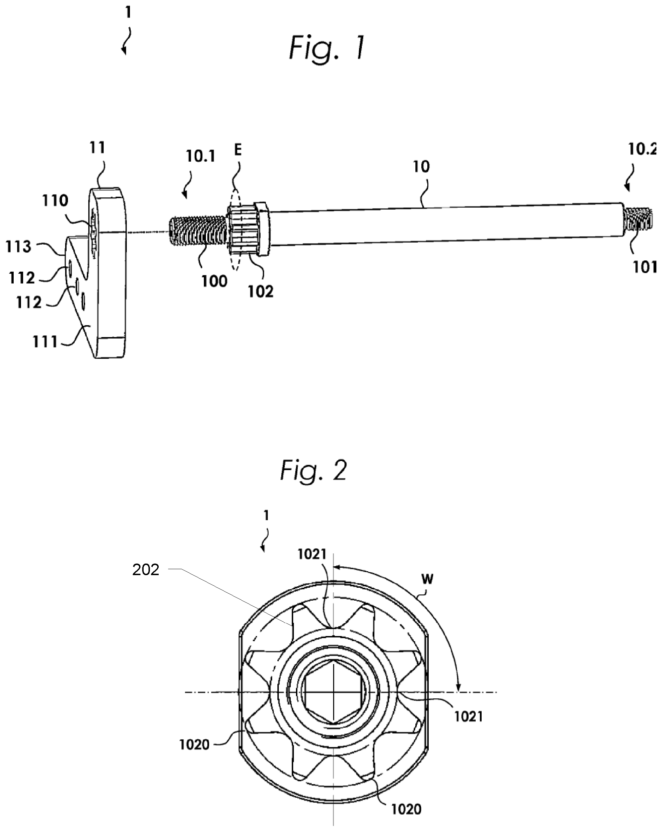

In **Figur 1** ist gezeigt eine erste Variante einer offenbarungsgemässen Universalsteckachse 1 in einer vorteilhaften Ausführungsform in perspektivischer Ansicht. Die Universalsteckachse 1 ein Kupplungselement 11 für ein Anbauteil, wobei das Kupplungselement 11 mindestens eine mit dem Querschnitt des Kupplungsadapters 102 entsprechend korrespondierend ausgebildete sternförmige oder mehrkantige Aufnahme 110 zur form- und/oder kraftschlüssigen Aufnahme des Kupplungsadapters 102 umfasst.

Das Kupplungselement 11 kann in diversen Ausführungsformen ausgeführt und zur Anordnung unterschiedlichster Zubehörteile an dem Fahrrad oder Elektrofahrrad (nicht gezeigt) ausgebildet sein, wie beispielsweise zur Ermöglichung der Montage eines Anhängers, Ständers oder Gepäckträgers, etc. Der Anwender hat so die Möglichkeit die Universalsteckachse 1 immer wieder anzupassen, ohne eine neue Universalsteckachse 1 für den jeweiligen Einsatzzweck kaufen zu müssen.

Der Kupplungsadapter 102 und die Aufnahme 110 des Kupplungselements 11 sind vorzugsweise ausgebildet, die Aufnahmeposition des Kupplungselements 11 an dem Kupplungsadapter 102 um einen Winkel W von ±22,5° und/oder ±45° verstellen zu können.

Weiterhin sieht die vorliegende Offenbarung vorteilhafterweise vor, dass das Kupplungselement 11 aus einem Profilkörper 111 gebildet ist, an dem zusätzlich zur Aufnahme 110 mindestens eine Verbindungsaufnahme 112 ausgebildet oder aufgenommen ist, wobei die mindestens eine Verbindungsaufnahme 112 beispielsweise an einem von der Aufnahme 110 weggerichteten Profilteil 113 des Profilkörpers 111 angeordnet sein kann. Der Profilkörper 111 ist in der dargestellten Ausführungsform vorzugsweise plattenförmig und besonders vorteilhaft L-förmig ausgebildet, wobei selbstverständlich jegliche Form und Ausgestaltung des Profilkörpers 111 in Betracht kommt.

Die vorliegende Offenbarung betrifft weiterhin vorzugsweise ein Universalsteckachssystem mit einer offenbarungsgemässen Universalsteckachse 1 für einen Fahrradständer, einen Gepäckträger und/oder einen Anhänger, wobei an dem Fahrradständer, dem Gepäckträger und/oder an dem Anhänger eine mit dem Kupplungsadapter 102 entsprechend korrespondierende Ständer-, Gepäckträger- oder Anhängeraufnahme ausgebildet ist, um den Fahrradständer, den Gepäckträger und/oder den Anhänger an der Universalsteckachse 1 zu befestigen.

Wie am besten in **Figur 2** ersichtlich ist, zeigt die erste Variante von Figur 1 im Querschnitt die Universalsteckachse 1 mit dem Kupplungsadapter 102, welcher Ausprägungen am Kupplungsadapter 1020 und Ausnehmungen am Kupplungsadapter 1021 aufweist. Die Ausprägungen am Kupplungsadapter 1020 und die Ausnehmungen am Kupplungsadapter 1021 sind in einem Winkel W zueinander angeordnet, um eine verdrehsichere Aufnahme des Kupplungselements 11 zu gewährleisten.

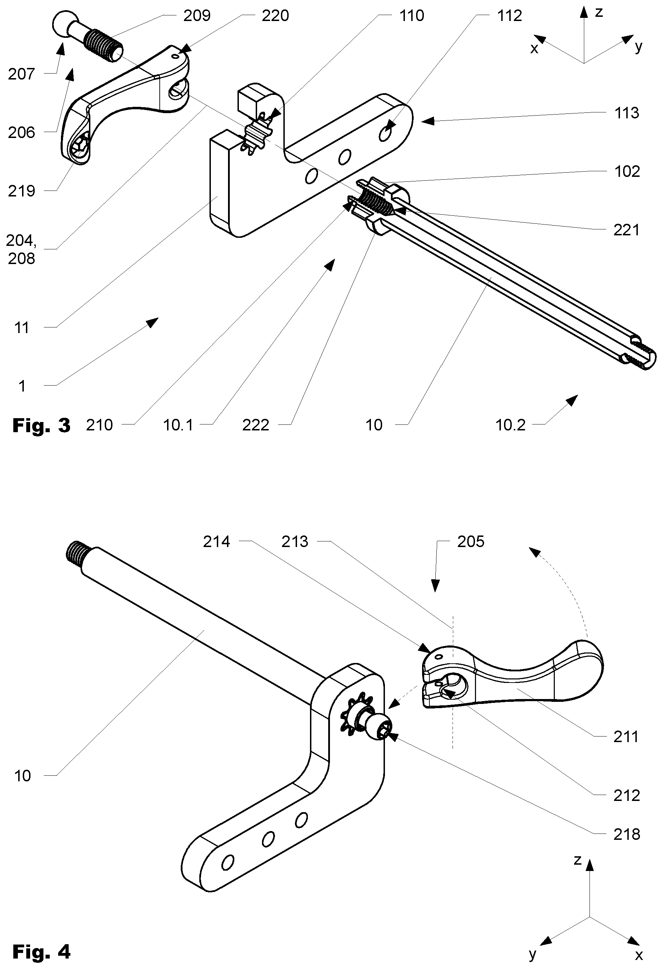

Eine zweite Variante einer offenbarungsgemässen Universalsteckachse 1 gemäss der Offenbarung wie in **Figur 3** gezeigt umfasst den länglichen Achskörper 10, welcher sich entlang einer Längsachse 204 erstreckt und die erste Seite 10.1 sowie die zweite Seite 10.2 aufweist. An der ersten Seite 10.1 ist der Kupplungsadapter 102 mit einem Kragen 222 ausgebildet, wobei der längliche Achskörper 10 eine endseitige Öffnung 210 mit einem Innengewinde 221 aufweist. Das Kupplungselement 11 ist als ein Profilkörper des Kupplungselements 111 ausgebildet, welcher ein weggerichtetes Profilteil am Kupplungselement 113 mit Verbindungsaufnahmen am Kupplungselement 112 und eine Aufnahme des Kupplungselements 110 aufweist. Eine Lagerschraube 206 weist einen Kopf 207, einen Gewindeabschnitt 209, ein Schlüsselprofil 219 und eine Querbohrung 220 für eine Sicherung auf. Der Gewindeabschnitt 209 der Lagerschraube 206 ist eingerichtet, durch die Aufnahme des Kupplungselements 110 hindurch in das Innengewinde 221 in der endseitigen Öffnung 210 des länglichen Achskörpers 10 eingeschraubt zu werden, um das Kupplungselement 11 an dem Kupplungsadapter 102 zu fixieren.

In **Figur 4** ist die zweite Variante von **Figur 3** mit einem abgenommenen Schnellspanner 205 gezeigt. Der Schnellspanner 205 umfasst einen Exzenterspannhebel 211 mit einer gabelförmigen Aufnahme 212, welche um eine Schwenkachse 213 schwenkbar gelagert ist. Der Exzenterspannhebel 211 weist einen Anschlag 214 auf, welcher exzentrisch zur Schwenkachse 213 ausgeformt ist. Ein Mitnahmeprofil 218 ist an dem Kopf der Lagerschraube ausgebildet, um mit dem Exzenterspannhebel 211 zusammenzuwirken. Das Ansetzen und Verschwenken des Exzenterspannhebels 211 ist durch die gestrichelten Pfeile angedeutet.

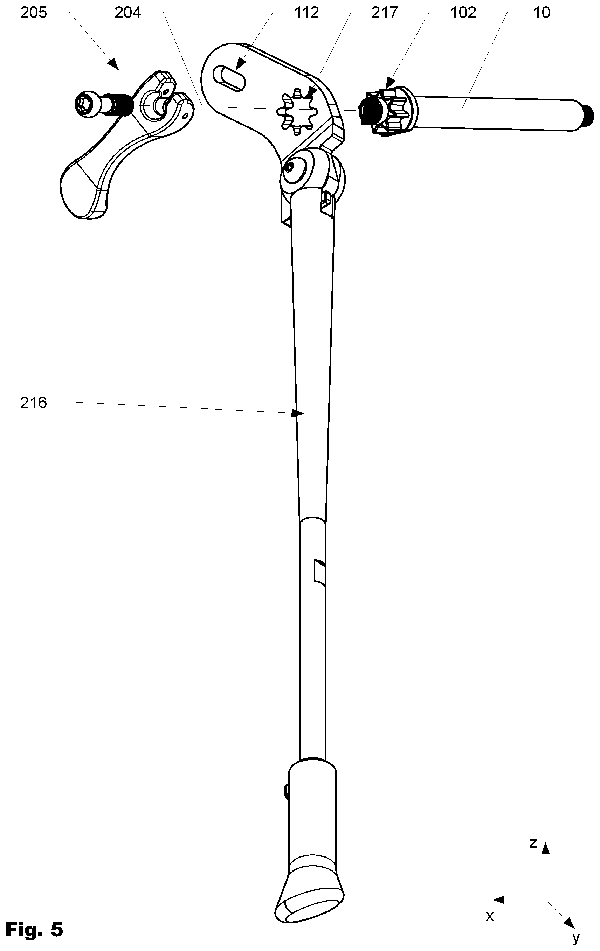

In **Figur 5** ist eine dritte Variante der offenbarungsgemässen Universalsteckachse mit einem Fahrradständer 216 in einer perspektivischen Ansicht gezeigt. Der Fahrradständer 216 weist eine Ständeraufnahme 217 auf, welche formschlüssig auf den Kupplungsadapter 102 des länglichen Achskörpers 10 aufgesetzt ist. Der Schnellspanner 205 dient zur axialen Fixierung des Fahrradständers 216 an dem Kupplungsadapter 102, wobei eine Verbindungsaufnahme am Kupplungselement 112 am Fahrradständer 216 ausgebildet ist.

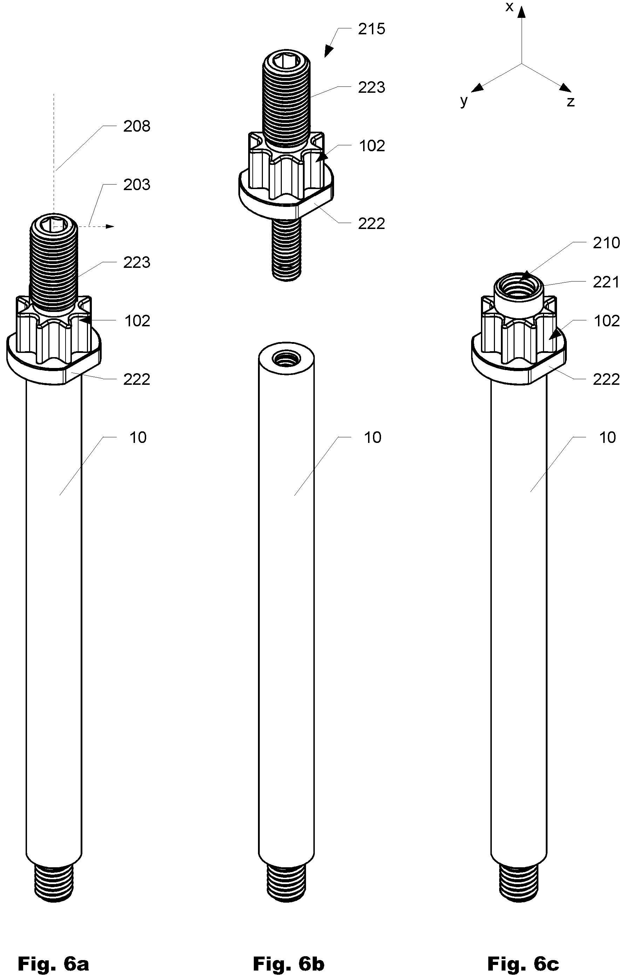

In **Figur 6a** ist die erste Variante einer offenbarungsgemässen Universalsteckachse in einer perspektivischen Ansicht gezeigt, bei welcher der Kupplungsadapter 102 einstückig mit dem länglichen Achskörper 10 ausgebildet ist. Der Kupplungsadapter 102 weist einen Kragen 222 und ein Aussengewinde 223 auf, welche sich entlang der Längsachse 204 erstrecken, wobei eine radiale Richtung 203 senkrecht zur Längsachse 204 verläuft. In **Figur 6b** ist eine vierte Variante einer offenbarungsgemässen Universalsteckachse in einer perspektivischen Ansicht gezeigt, bei welcher der längliche Achskörper 10 als separates Bauteil mit einem Endstück 215 verbunden ist, welches den Kupplungsadapter 102, den Kragen 222 und das Aussengewinde 223 aufweist.

Auf das Aussengewinde 223 lässt sich konventionelles Zubehör montieren.

In **Figur 6c** ist die zweite beziehungsweise dritte Variante einer offenbarungsgemässen Universalsteckachse in einer perspektivischen Ansicht gezeigt, bei welcher der Kupplungsadapter 102 mit dem Kragen 222 ausgebildet ist und eine endseitige Öffnung 210 mit einem Innengewinde 221 aufweist. Das Innengewinde dient zur Befestigung eines Schnellspanners, insbesondere einer Lagerschraube.

### LISTE DER BEZUGSZEICHEN

- 1: Universalsteckachse
- 10: länglicher Achskörper
- 11: Kupplungselement
- 10.1, 10.2: Seiten des Achskörpers
- 100, 101: Befestigungsmittel am Achskörper
- 102: Kupplungsadapter
- 110: Aufnahme des Kupplungselements
- 111: Profilkörper des Kupplungselements
- 112: Verbindungsaufnahmen am Kupplungselement
- 113: weggerichtetes Profilteil am Kupplungselement
- 1020: Ausprägungen am Kupplungsadapter
- 1021: Ausnehmungen am Kupplungsadapter
- E: Querschnittebene des Kupplungsadapters
- 202: Kupplungskontur
- 203: radiale Richtung
- 204: Längsachse
- 205: Schnellspanner
- 206: Lagerschraube
- 207: Kopf
- 208: Längsrichtung
- 209: Gewindeabschnitt
- 210: endseitige Öffnung
- 211: Exzenterspannhebel
- 212: gabelförmige Aufnahme
- 213: Schwenkachse
- 214: Anschlag
- 215: Endstück
- 216: Fahrradständer
- 217: Ständeraufnahme
- 218: Mitnahmeprofil
- 219: Schlüsselprofil
- 220: Querbohrung
- 221: Innengewinde
- 222: Kragen
- 223: Aussengewinde

## Patentansprüche

1. Universalsteckachse (1) zur Befestigung eines Rades an einem Rahmen eines Fahrrads oder Elektrofahrrads mit einem länglichen Achskörper (10) mit einer ersten (10.1) und einer zweiten Seite (10.2), wobei an den Seiten (10.1, 10.2) Befestigungsmittel (100, 101) zur Befestigung der Universalsteckachse (1) an einem Rahmen ausgebildet sind, wobei an mindestens einer Seite (10.1) des Achskörpers (10) ein Kupplungsadapter (102) zur Aufnahme eines Kupplungselements (11) angeordnet oder ausgebildet ist.

2. Universalsteckachse (1) nach Anspruch 1, **wobei** der Kupplungsadapter (102) in seinem Querschnitt eine Kupplungskontur (200) mit zumindest einer Ausprägung (1020) und/oder zumindest einer Ausnehmung (1021) in radialer Richtung (203) aufweist, um das Kupplungselement (11) verdrehsicher aufzunehmen.

3. Universalsteckachse (1) nach mindestens einem der vorangegangenen Ansprüche, **wobei** der Kupplungsadapter (102) rotationssymmetrisch bezüglich einer Rotation um eine Längsachse (204) des Achskörpers (10) ist.

4. Universalsteckachse (1) nach mindestens einem der vorangegangenen Ansprüche, **wobei** der Kupplungsadapter (102) in seinem Querschnitt sternförmig oder mehrkantig ausgebildet ist, wobei vorzugsweise mindestens zwei der durch die Stern- oder Mehrkantform des Kupplungsadapters (102) gebildeten Ausprägungen (1020) und/oder Ausnehmungen (1021) in einem Winkel (W) von ±22,5° und/oder ±45° bezogen auf die Querschnittebene (E) des Kupplungsadapters (102) zueinander ausgerichtet sind.

5. Universalsteckachse (1) nach mindestens einem der vorangegangenen Ansprüche, **wobei** sie ein Kupplungselement (11) für ein Anbauteil umfasst, wobei das Kupplungselement (11) mindestens eine mit dem Querschnitt des Kupplungsadapters (102) entsprechend korrespondierend ausgebildete sternförmige oder mehrkantige Aufnahme (110) zur form- und/oder kraftschlüssigen Aufnahme des Kupplungsadapters (102) umfasst.

6. Universalsteckachse (1) nach Anspruch 5, **wobei** der Kupplungsadapter (102) und die Aufnahme (110) des Kupplungselements (11) ausgebildet sind, die Aufnahmeposition des Kupplungselements (11) an dem Kupplungsadapter (102) um einen Winkel (W) von ±22,5° und/oder ±45° verstellen zu können.

7. Universalsteckachse (1) nach Anspruch 5 oder 6, **wobei** das Kupplungselement (11) aus einem Profilkörper (111) gebildet ist, an dem zusätzlich zur Aufnahme (110) mindestens eine Verbindungsaufnahme (112) ausgebildet oder aufgenommen ist.

8. Universalsteckachse (1) nach Anspruch 7, **wobei** die mindestens eine Verbindungsaufnahme (112) an einem von der Aufnahme (110) weggerichteten Profilteil (113) des Profilkörpers (111) angeordnet ist.

9. Universalsteckachse (1) nach Anspruch 7 oder 8, **wobei** der Profilkörper (111) plattenförmig ausgebildet ist, **wobei** der Profilkörper (111) insbesondere L-förmig ausgebildet ist.

10. Universalsteckachse (1) nach mindestens einem der vorangegangenen Ansprüche, **wobei** an der ersten Seite (10.2) eine Schraube, eine Mutter und/oder einen Schnellspanner (205) lösbar mit den Achskörper (10) verbunden ist, um Zubehör und/oder ein Kupplungselement (11) in Längsrichtung (208) an den Achskörper (10) zu fixieren.

11. Universalsteckachse (1) nach Anspruch 10, **wobei** der Schnellspanner (205) umfasst:
a. eine Lagerschraube (206) mit einem Kopf (207) und einem in Längsrichtung (208) dem Kopf (207) gegenüberliegenden Gewindeabschnitt (209), der in eine endseitige Öffnung (210) des Achskörpers (10) eingeschraubt ist; und
b. einen länglichen Exzenterspannhebel (211) mit einer gabelförmigen Aufnahme (212) zur Aufnahme des Kopfes (207) der Lagerschraube (206), wobei der Exzenterspannhebel (211) um eine durch den Kopf (207) der Lagerschraube (206) verlaufende Schwenkachse (213) schwenkbar gelagert ist und ein relativ zur Schwenkachse (213) exzentrischen Anschlag (214) aufweist, sodass durch Verschwenken des Exzenterspannhebels (211) aus einer geöffneten Stellung in eine geschlossene Stellung eine axiale Zugspannung auf den Achskörper (10) bewirkt wird.

12. Universalsteckachse (1) nach mindestens einem der vorangegangenen Ansprüche, **wobei** der Achskörper (10) einstückig mit dem Kupplungsadapter (102) ausgebildet ist, oder der Achskörper (10) mit einem separaten, den Kupplungsadapter (102) aufweisenden, Endstück (215) verbunden ist.

13. Universalsteckachssystem mit einer Universalsteckachse (1) nach einem oder mehreren der vorangegangenen Ansprüche, **wobei** sie einen Fahrradständer (216) umfasst, an dem eine mit dem Kupplungsadapter (102) entsprechend korrespondierende Ständeraufnahme (217) ausgebildet ist, um den Fahrradständer an der Universalsteckachse (1) zu befestigen.

14. Universalsteckachssystem mit einer Universalsteckachse (1) nach einem oder mehreren der vorangegangenen Ansprüche, **wobei** es einen Gepäckträger umfasst, an dem eine mit dem Kupplungsadapter (102) entsprechend korrespondierende Gepäckträgeraufnahme ausgebildet ist, um den Gepäckträger an der Universalsteckachse (1) zu befestigen.

15. Universalsteckachssystem mit einer Universalsteckachse (1) nach einem oder mehreren der vorangegangenen Ansprüche, **wobei** es einen Anhänger umfasst, an dem eine mit dem Kupplungsadapter (102) entsprechend korrespondierende Anhängeraufnahme ausgebildet ist, um den Anhänger an der Universalsteckachse (1) zu befestigen.
